# EUROPÄISCHE PATENTSCHRIFT

(11) **EP 4 268 570 B1**
(45) Veröffentlichungstag und Bekanntmachung des Hinweises auf die Patenterteilung: **09.04.2025**
(21) Anmeldenummer: 23155731.5
(22) Anmeldetag: 09.02.2023
(51) Int. Cl.: A01F 12/48

(54) **SELBSTFAHRENDER MÄHDRESCHER**
SELF-PROPELLED COMBINE HARVESTER
MOISSONNEUSE-BATTEUSE AUTOMOTRICE

(30) Priorität: 25.04.2022 DE 102022109874
(43) Veröffentlichungstag der Anmeldung: 01.11.2023
(73) Patentinhaber: CLAAS Selbstfahrende Erntemaschinen GmbH, 33428 Harsewinkel (DE)
(72) Erfinder: Vieregge, Christopher, 32694 Dörentrup (DE); Beckmann, Hermann-Konstantin, 32584 Löhne (DE); Diekamp, Andreas, 49176 Hilter (DE)
(74) Vertreter: CLAAS Gruppe

(56) Entgegenhaltungen:
- EP-A1- 3 662 738
- EP-A1- 3 903 557
- EP-A2- 1 790 208
- DE-A1- 2 620 875

## Beschreibung

Die vorliegende Anmeldung betrifft einen selbstfahrenden Mähdrescher gemäß dem Oberbegriff von Anspruch 1.

Der Mähdrescher umfasst ein Schneidorgan zum Abschneiden von Pflanzen, die auf einem Feld aufstehen. Das Schneidorgan kann insbesondere einen Mähbalken umfassen, mittels dessen die Pflanzen bodennah abgeschnitten werden können. Ausgehend von dem Schneidorgan werden die abgeschnittenen Pflanzen mittels eines Schrägförderer in Richtung eines Dreschorgans gefördert. Das Dreschorgan umfasst typischerweise eine Mehrzahl von Dreschelementen, beispielsweise eine tangentiale Dreschtrommel. Das Dreschorgan ist dazu eingerichtet, die geschnittenen Pflanzen derart zu verarbeiten, dass Früchte von Pflanzenresten abgelöst werden. Beispielsweise können Körner aus Ähren ausgedroschen werden, sodass die Körner fortan getrennt von dem Rest der jeweiligen Pflanze vorliegen, der sodann den Pflanzenrest bildet. Ein wesentlicher Teil der Früchte sowie feine Pflanzenreste sind unmittelbar im Bereich des Dreschorgans durch einen Dreschkorb desselben abscheidbar, wobei die Früchte von dem Dreschorgan ausgehend nach unten auf einen Vorbereitungsboden geleitet werden. Im Übrigen wird ein aus Früchten und Pflanzenresten gebildetes Gemisch ausgehend von dem Dreschorgan an ein Trennorgan weitergeleitet, mittels dessen zumindest grobe Pflanzenreste von den Früchten sowie feinen Pflanzenresten trennbar sind. Die Pflanzenreste werden typischerweise an einer Rückseite des Mähdreschers ausgeworfen, wobei sie gegebenenfalls zuvor mittels eines Häckselorgans gehäckselt werden können.

Die mittels des Trennorgans abgetrennten Früchte und feinen Pflanzenreste werden an ein Sieborgan weitergeleitet, mittels dessen die verbliebenen feinen Pflanzenreste abgesiebt werden. Ferner werden dem Sieborgan die Früchte und feinen Pflanzenreste zugeleitet, die bereits mittels des Dreschkorbs des Dreschorgans abgeschieden wurden. Diese werden mittels des Vorbereitungsbodens dem Sieborgan zugeleitet.

Die Trennung der Früchte von den feinen Pflanzenresten, beispielsweise Spreu, mittels des Sieborgans erfolgt typischerweise mittels eines Luftvolumenstroms, der entlang des Sieborgans geleitet wird. Dieser ist dazu geeignet, die feinen und mithin leichten Pflanzenreste zu mobilisieren und in Richtung des hinteren Endes des Mähdreschers zu befördern. Die demgegenüber schwereren, nicht schwebefähigen Früchte werden nicht von dem Luftvolumenstrom beeinflusst und können auf diese Weise von den Pflanzenresten getrennt werden. Zur Erzeugung des Luftvolumenstroms umfasst der Mähdrescher ein Saugwindgebläse, das einem in Längsrichtung des Mähdreschers betrachtet hinteren Ende des Sieborgans zugeordnet ist. Eine Saugseite dieses Saugwindgebläses ist dem Sieborgan zugeordnet, sodass das Saugwindgebläse dazu geeignet ist, den Luftvolumenstrom ausgehend von einem in Längsrichtung des Mähdreschers betrachtet vor dem Sieborgan angeordneten Lufteintrittsquerschnitt entlang des Sieborgans zu führen, sodass in der gewünschten Weise die feinen Pflanzenreste erfasst und abtransportiert werden können. Die auf diese Weise mittels des Sieborgans abgesiebten Früchte werden in der Regel mittels eines Elevators in einen Korntank gefördert.

Mähdrescher der vorstehend beschriebenen Art sind im Stand der Technik bereits bekannt. Hierzu wird beispielhaft auf die deutsche Offenlegungsschrift DE 24 19 141 A1 hingewiesen. Diese beschreibt eine Steinfangmulde für einen Mähdrescher, die zwischen dem Schrägförderer und dem Dreschorgan angeordnet ist.

Im Stand der Technik hat es sich als nachteilig herausgestellt, dass in einem Bereich zwischen dem Schrägförderer und dem Vorbereitungsboden im Zuge des Betriebs des jeweiligen Mähdreschers ein Kornverlust auftritt. Dieser kommt dadurch zustande, dass die Früchte, die durch den Dreschkorb hindurch in Richtung des Vorbereitungsbodens abgeschieden werden, in unbeabsichtigter Weise in Richtung des vorderen Endes des Mähdreschers beschleunigt werden und sodann durch den Lufteintrittsquerschnitt, der zwischen dem Schrägförderer und dem Vorbereitungsboden ausgebildet ist, entweichen. Die hierzu führenden Trajektorien der betroffenen Früchte können durch einen ungünstigen Aufprall einer jeweiligen Frucht auf dem Vorbereitungsboden oder infolge der zyklisch schwingenden Bewegung des Vorbereitungsboden bedingt sein.

Ein weiterer Mähdrescher ist z.B. aus EP3662738 A1 bekannt.

Der vorliegenden Anmeldung liegt mithin die Aufgabe zugrunde, einen Mähdrescher bereitzustellen, bei dem der beschriebene Kornverlust gegenüber dem Stand der Technik reduziert ist.

Die zugrunde liegende Aufgabe wird erfindungsgemäß mittels eines selbstfahrenden Mähdreschers mit den Merkmalen des Anspruchs 1 gelöst. Vorteilhafte Ausgestaltungen ergeben sich aus den zugehörigen Unteransprüchen.

Der erfindungsgemäße Mähdrescher ist dadurch gekennzeichnet, dass der Lufteintrittsquerschnitt an einer Lufteintrittsstruktur ausgebildet ist, die zwischen dem Dreschorgan und dem Vorbereitungsboden angeordnet ist. Der durch diesen Lufteintrittsquerschnitt angesaugte Luftvolumenstrom wird entlang des Vorbereitungsbodens zu dem Sieborgan und schließlich dem Saugwindgebläse geführt, mittels dessen der Luftvolumenstrom ansaugbar ist und das dem hinteren Ende des Sieborgans zugeordnet ist. Erfindungsgemäß umfasst die Lufteintrittsstruktur einen Rieselkornschutz, der einen unerwünschten Austritt von Früchten durch den Lufteintrittsquerschnitt vermindert. Vorzugsweise ist dieser Austritt mittels des Rieselkornschutzes vollständig verhindert.

Der erfindungsgemäße Mähdrescher hat viele Vorteile. Insbesondere ermöglicht er den Eintritt des Luftvolumenstroms in dem Bereich zwischen dem Schrägförderer und dem Vorbereitungsboden, sodass die vorstehend erläuterte reinigende Wirkung des Luftvolumenstroms, die in der Mobilisierung der feinen Pflanzenreste besteht, bereits im Bereich des Vorbereitungsbodens wirken kann. Mittels der Lufteintrittsstruktur, die den beschriebenen Rieselkornschutz aufweist, ist gleichwohl der Austritt von Früchten durch den Lufteintrittsquerschnitt vermindert.

In bevorzugter Weise ist der Rieselkornschutz hierbei nach Art einer Labyrinthdichtung ausgebildet, die bewirkt, dass Früchte, die in ungünstiger Weise in Richtung des Lufteintrittsquerschnitts beschleunigt werden, daran gehindert sind, entlang einer unbeeinflussten Trajektorie den Bereich des Vorbereitungsbodens durch den Lufteintrittsquerschnitt hindurch zu verlassen. Insbesondere bewirkt die Labyrinthdichtung, dass ein Verbindungsweg zwischen einem Außenbereich, von dem aus der Luftvolumenstrom angesaugt wird, und dem Bereich des Vorbereitungsbodens mindestens eine, vorzugsweise eine Mehrzahl von Umlenkungen aufweist. Dies bewirkt, dass eine jeweilige Frucht mindestens an einer Stelle gegen ein Bauteil des Rieselkornschutzes prallt und hierdurch sehr wahrscheinlich daran gehindert wird, in ungewünschter Weise aus dem Bereich des Vorbereitungsbodens zu entkommen. Infolge der Ausgestaltung des Rieselkornschutzes nach Art einer Labyrinthdichtung wird entsprechend bewirkt, dass der Luftvolumenstrom, der durch den Lufteintrittsquerschnitt angesaugt wird, im Zuge seines Eintritts in den Bereich des Vorbereitungsbodens mehrfach umgelenkt wird.

Den erfindungsgemäßen Mähdrescher weiter ausgestaltend umfasst der Rieselkornschutz ein Leitblech, das sich in einem Bereich zwischen dem Schrägförderer und dem Vorbereitungsboden erstreckt. Dieses Leitblech kann insbesondere bezogen auf eine Längsrichtung des Mähdreschers schräg geneigt orientiert sein, wobei es vorzugsweise in Richtung eines hinteren Endes des Mähdreschers ansteigend geneigt ist. Diese Ausgestaltung ist besonders von Vorteil, um Früchte, die in ungünstiger Weise ausgehend von dem Vorbereitungsboden abgelenkt werden, zuverlässig von einem Austritt durch den Lufteintrittsquerschnitt abzuhalten.

In besonders bevorzugter Weise umfasst das Leitblech mindestens eine Öffnung, vorzugsweise eine Mehrzahl von Öffnungen, durch die hindurch Früchte von einer Oberseite des Leitblechs her in Richtung des Vorbereitungsbodens, d.h. einer Unterseite des Leitblechs, fallen können. Auf diese Weise ist die Möglichkeit geschaffen, dass Früchte, die auf der Oberseite des Leitblechs zur Ablage kommen, durch die Öffnung dem Bereich des Vorbereitungsbodens und somit der weiteren Verarbeitung zugeführt werden können. Früchte können auf die Oberseite des Leitblechs gelangen, wenn sie beispielsweise besonders ungünstig aus dem Dreschkorb auf den Vorbereitungsboden fallen oder in sonstiger Weise ungünstig abgelenkt bzw. beschleunigt werden. Auch ist es denkbar, dass oberhalb der Lufteintrittsstruktur eine Steinfangmulde ausgebildet ist, die ihrerseits eine Rieselöffnung aufweist, durch die in unbeabsichtigter Weise in die Steinfangmulde geratene Früchte in Richtung des Vorbereitungsbodens abgeleitet werden können. Eine entsprechende Ausgestaltung ist nachstehend gesondert erläutert.

Sofern das Leitblech die beschriebene mindestens eine Öffnung aufweist, kann es weiterhin besonders vorteilhaft sein, wenn der Rieselkornschutz an einer Unterseite des Leitblechs ein der Öffnung zugeordnetes Prallblech umfasst. Dieses ist dazu eingerichtet, die Öffnung von unten her derart abzuschirmen, dass ein unbeabsichtigter Durchtritt von Früchten von der Unterseite des Leitblechs her durch die Öffnung hindurch zu der Oberseite des Leitblechs vermieden ist. Das Prallblech hat mithin insbesondere die Funktion, eine mögliche Trajektorie einer Frucht, beispielsweise eines Korns, zu versperren, die von dem Vorbereitungsboden durch die Öffnung hindurch zu der Oberseite des Leitblechs gerichtet ist. Hierzu kann es besonders vorteilhaft sein, wenn das Prallblech gegenüber einer Ebene des Leitblechs geneigt orientiert ist, sodass es die Öffnung als solche nicht versperrt und mithin einen gewünschten Durchtritt von Früchten von der Oberseite des Leitblechs in Richtung des Vorbereitungsbodens möglich ist, während der unerwünschte Durchtritt in die andere Richtung zumindest im Wesentlichen blockiert ist.

Des Weiteren kann eine solche Ausgestaltung des Rieselkornschutzes besonders vorteilhaft sein, bei der in Strömungsrichtung des Luftvolumenstroms betrachtet vor der mindestens einen Öffnung eine nach oben über die Oberseite des Leitblechs vorstehende Fangwand ausgebildet ist. Diese hat insbesondere die Funktion, Früchte, die auf der Oberseite des Leitblechs zur Ablage kommen, daran zu hindern, sich in einen Bereich jenseits der Fangwand zu bewegen und hiermit der Ableitung in Richtung des Vorbereitungsbodens durch die Öffnung hindurch zu entkommen. Die Fangwand ist dann von besonderem Vorteil, wenn das Leitblech in der vorstehend beschriebenen Weise gegenüber der Längsrichtung des Mähdreschers geneigt ausgebildet ist, insbesondere wenn diese Neigung in Richtung des hinteren Endes des Mähdreschers ansteigend ist. Dies hat nämlich zur Folge, dass auf die Oberseite des Leitblechs gelangende Früchte auf dem Leitblech in Richtung eines vorderen Endes des Mähdreschers abrutschen und auf diese Weise zu dem Lufteintrittsquerschnitt gelangen und durch diesen in die Umgebung entweichen können. Die Fangwand stellt sich einer solchen Bewegung der Früchte in den Weg und fängt diese auf, sodass die Früchte durch die Öffnung zu dem Vorbereitungsboden abgeleitet werden können.

In einer besonders vorteilhaften Ausgestaltung des erfindungsgemäßen Mähdreschers umfasst dieser eine Steinfangmulde, die an einem dem Schrägförderer zugewandten Ende des Dreschorgans angeordnet ist. Die Steinfangmulde ist dazu eingerichtet, den Eintrag von Steinen in das Dreschorgan zu vermeiden. Sofern eine Steinfangmulde vorhanden ist, ist es besonders von Vorteil, wenn die Lufteintrittsstruktur zwischen der Steinfangmulde und dem Vorbereitungsboden angeordnet ist. Bei dieser Ausgestaltung befindet sich entsprechend auch der Lufteintrittsquerschnitt zwischen der Steinfangmulde und dem Vorbereitungsboden.

In besonders bevorzugter Weise ist bei Vorhandensein der Steinfangmulde der Vorbereitungsboden in solcher Weise ausgebildet, dass er sich in Längsrichtung des Mähdreschers betrachtet bis zu einem vorderen Ende der Steinfangmulde erstreckt. Mithin endet der Vorbereitungsboden gewissermaßen zumindest im Wesentlichen bündig mit einem vorderen Ende der Steinfangmulde. Dies hat den besonderen Vorteil, dass der Bereich des Vorbereitungsbodens gegenüber dem Stand der Technik weiter in Richtung des vorderen Endes des Mähdreschers gezogen ist, wodurch Früchte, die in ungünstiger Weise in Richtung des Lufteintrittsquerschnitt beschleunigt werden, mit geringerer Wahrscheinlichkeit den Lufteintrittsquerschnitt erreichen können, da dieser ebenfalls in Richtung des vorderen Endes des Mähdreschers verlagert ist.

Entsprechend ist es besonders von Vorteil, wenn die Lufteintrittsstruktur unterhalb eines vorderen Endes der Steinfangmulde angeordnet ist, das dem Schrägförderer zugewandt ist. Der Lufteintrittsstruktur kommt bei dieser Ausgestaltung gemäß vorstehender Erläuterung unterschiedslos die Aufgabe zu, Früchte, die in ungünstiger Weise abgelenkt oder beschleunigt werden, vor einem Austritt aus dem Bereich des Vorbereitungsbodens heraus in eine Umgebung zu schützen.

Sofern der Rieselkornschutz in der vorstehend beschriebenen Weise ein Leitblech mit einer darin ausgebildeten Öffnung umfasst, an der eine Fangwand angeordnet ist, kann es weiterhin von besonderem Vorteil sein, wenn diese Fangwand des Rieselkornschutzes und eine vordere, typischerweise vertikal orientierte Wandung der Steinfangmulde gemeinsam den Lufteintrittsquerschnitt begrenzen. Bei dieser Ausgestaltung erstreckt sich der Lufteintrittsquerschnitt mithin zwischen einem unteren Ende der Wandung der Steinfangmulde und einem oberen Ende der Fangwand, wobei der Lufteintrittsquerschnitt insbesondere die Form eines Schlitzes einnehmen kann. Bei dieser Ausgestaltung ist es besonders vorteilhaft, wenn die Fangwand des Rieselkornschutzes und die Wandung der Steinfangmulde zumindest im Wesentlichen entlang einer gemeinsamen Ebene ausgerichtet sind. Idealer Weise erstrecken sich beide Bauteile flächig in einer gemeinsamen Ebene.

Betreffend die Steinfangmulde kann es des Weiteren besonders vorteilhaft sein, wenn diese eine vorstehend bereits angesprochene Rieselöffnung aufweist, durch die hindurch in die Steinfangmulde gelangte Früchte in Richtung der Lufteintrittsstruktur und mithin in Richtung des Vorbereitungsbodens abgeleitet werden können. Auf diese Weise können auch solche Früchte noch gewonnen und verwertet werden, die unbeabsichtigt in der Steinfangmulde abgeschieden wurden.

In besonders bevorzugter Weise ist bei einer Ausgestaltung, bei der der Rieselkornschutz das Leitblech mit der darin befindlichen Öffnung sowie die Fangwand umfasst, die Rieselöffnung derart relativ zu dem Rieselkornschutz angeordnet, dass die Rieselöffnung in Längsrichtung des Mähdreschers betrachtet hinter der Fangwand bzw. umgekehrt die Fangwand in Längsrichtung des Mähdreschers betrachtet vor der Rieselöffnung angeordnet sind. Dies hat den technischen Effekt, dass die Früchte, die durch die Rieselöffnung hindurch in Richtung der Lufteintrittsstruktur fallen, mittels der Fangwand daran gehindert sind, den Lufteintrittsquerschnitt zu erreichen und auf diesem Wege in die Umgebung zu entweichen. Stattdessen werden sie spätestens an der Fangwand abgefangen und durch die Öffnung des Leitblechs hindurch in den Bereich des Vorbereitungsbodens geleitet.

Entsprechend ist es besonders vorteilhaft, wenn die Öffnung des Leitblechs der Rieselöffnung derart räumlich zugeordnet ist, dass durch die Rieselöffnung hindurchfallen der Früchte durch die Öffnung des Leitblechs hindurch in Richtung des Vorbereitungsbodens leitbar sind.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Ein Querschnitt im Bereich einer Lufteintrittsstruktur zwischen einem Schrägförderer und einem Vorbereitungsboden des Mähdreschers gemäß Figur 1,
- Fig. 3:: Eine perspektivische Ansicht des Querschnitts gemäß Figur 2,
- Fig. 4:: Eine weitere perspektivische Ansicht des Querschnitts gemäß Figur 2.

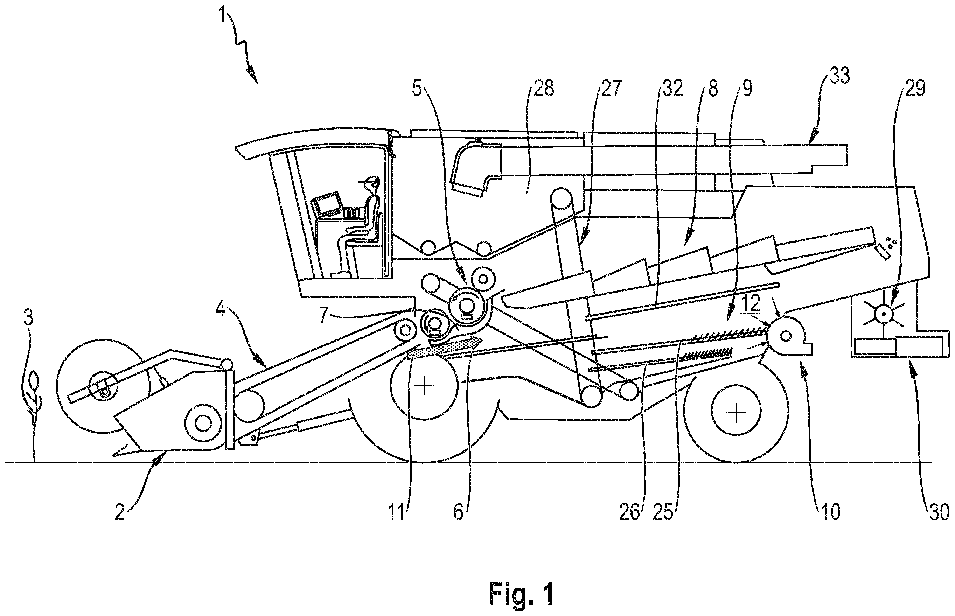

Ein Ausführungsbeispiel, das in den **Figuren 1 bis 4** gezeigt ist, umfasst einen erfindungsgemäßen Mähdrescher **1.** Dieser umfasst ein Schneidorgan **2,** mittels dessen Pflanzen **3,** die auf einem Feld aufstehen, abgeschnitten werden können. Die abgeschnittenen Pflanzen **3** werden sodann mittels eines Schrägförderer **4** in Richtung eines Dreschorgans **5** befördert, mittels dessen die Pflanzen **3** verarbeitet werden. Hierbei werden Früchte von Pflanzenresten abgelöst, wobei bereits ein wesentlicher Anteil der Früchte durch einen Dreschkorb **7** des Dreschorgans **5** abgeschieden wird. Diese Früchte gelangen auf einen Vorbereitungsboden **6,** mittels dessen sie weiter in Richtung eines nachgeschalteten Sieborgans **9** gefördert werden. Die Pflanzenreste sowie abgelöste Früchte werden im Übrigen ausgehend von dem Dreschorgan **5** einem Trennorgan **8** zugeleitet, das in dem gezeigten Beispiel von einem Hordenschüttler gebildet ist. Mittels des Trennorgans **8** werden zumindest grobe Pflanzenreste abgeschieden und an einem hinteren Ende des Mähdreschers **1** einem Häckselorgan **29** zugeführt, mittels dessen die Pflanzenreste gehäckselt werden. Anschließend werden die Pflanzenreste mittels eines Austragorgans **30** aus dem Mähdrescher **1** ausgetragen.

Die mittels des Trennorgans **8** abgetrennten Früchte und feinen Pflanzenreste werden auf einen Rücklaufboden **32** abgeschieden und mittels des Rücklaufbodens **32** zunächst dem Vorbereitungsboden **6** und schließlich dem Sieborgan **9** zugeführt. Das Sieborgan **9** umfasst in dem gezeigten Beispiel ein Obersieb **25** und ein Untersieb **26,** die gemeinsam für das Absieben der feinen Pflanzenreste verantwortlich sind, sodass die Früchte zumindest im Wesentlichen frei von Pflanzenresten gesammelt werden können. An einem hinteren Ende des Sieborgans **9** ist hierzu ein Saugwindgebläse **10** angeordnet, mittels dessen ein Luftvolumenstrom **11** an einer Saugseite **12** des Saugwindgebläses **10** ansaugbar ist. Dieser Luftvolumenstrom **11** wird durch mehrere Lufteintrittsquerschnitte angesaugt, die in Längsrichtung des Mähdreschers **1** betrachtet vor dem Sieborgan **9** ausgebildet sind. Insbesondere ist ein Lufteintrittsquerschnitt **13** an einem vorderen Ende des Vorbereitungsbodens **6** ausgebildet, wobei sich der Lufteintrittsquerschnitt **13** höhenmäßig zwischen dem Schrägförderer **4** und dem Vorbereitungsboden **6** bzw. zwischen dem Dreschorgan **5** und dem Vorbereitungsboden 6 befindet. Der Luftvolumenstrom **11,** der durch den Lufteintrittsquerschnitt **13** angesaugt wird, strömt mithin sowohl entlang des Vorbereitungsbodens **6** als auch entlang des Sieborgans **9** und bewirkt hierbei fortwährend eine Reinigung, wobei die feinen Pflanzenreste, die noch nicht mittels des Trennorgans **8** abgeschieden wurden, mobilisiert und in Richtung des Saugwindgebläses **10** abtransportiert werden. Dort werden sie in das Saugwindgebläse **10** gesaugt und an einer Druckseite des Saugwindgebläses **10** wieder abgegeben. Insbesondere können die feinen Pflanzenreste hierbei dem Austragorgan **30** zugeführt werden, mittels dessen sie schließlich aus dem Mähdrescher **1** ausgetragen werden. Nach dem Abscheiden der feinen Pflanzenreste werden die Früchte schließlich mittels eines Elevators **27** einem Korntank **28** zugeführt und dort gesammelt, bis sie mittels einer Überladeeinrichtung **33** an ein in den Figuren nicht dargestelltes Transportfahrzeug überladen werden.

In dem gezeigten Beispiel umfasst der Mähdrescher **1** des Weiteren eine Steinfangmulde **22** die zwischen einem hinteren, dem Dreschorgan **5** zugewandten Ende des Schrägförderers **4** und einem vorderen Ende des Dreschorgans **5** angeordnet ist. Höhenmäßig ist die Steinfangmulde **22** zwischen dem hinteren Ende des Schrägförderers **4** und dem Vorbereitungsboden **6** angeordnet. Die Steinfangmulde **22** dient dazu, in unbeabsichtigter Weise mittels des Schrägförderers **4** mitgeschleppte Steine abzuscheiden, sodass diese nicht in das Dreschorgan **5** gelangen.

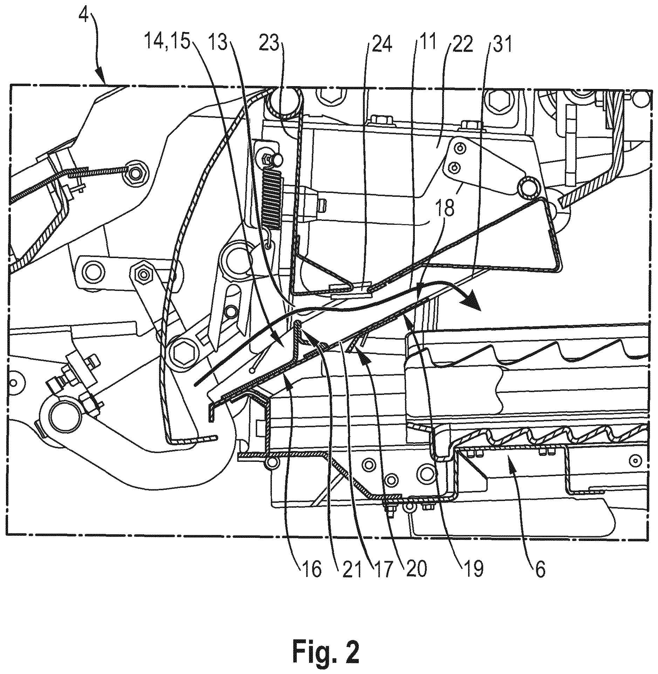

Erfindungsgemäß umfasst der Mähdrescher **1** eine Lufteintrittsstruktur **14,** die sich besonders gut anhand der **Figuren 2 bis 4** ergibt. Diese Lufteintrittsstruktur **14** ist in dem gezeigten Beispiel zwischen der Steinfangmulde **22** und dem Vorbereitungsboden **6** angeordnet. Hierbei ist der Vorbereitungsboden **6** derart ausgebildet, dass er sich bis zu einer vorderen Wandung **23** der Steinfangmulde **22** erstreckt. Mithin schließen der Vorbereitungsboden **6** und die Steinfangmulde **22** zumindest im Wesentlichen bündig entlang einer vertikalen Ebene miteinander ab. Die Lufteintrittsstruktur **14** befindet sich hierbei in einem Zwischenraum zwischen der Steinfangmulde **22** und dem Vorbereitungsboden **6.**

Die Lufteintrittsstruktur **14** umfasst einen Rieselkornschutz **15,** mittels dessen ein unbeabsichtigter Austritt von Früchten an dem vorderen Ende eines Bereichs des Vorbereitungsbodens **6** verhindert ist. Hierbei wird gleichzeitig der Lufteintrittsquerschnitt **13** freigelassen, sodass der Luftvolumenstrom **11** an dem vorderen Ende des Vorbereitungsbodens **6** von dem Saugwindgebläse **10** angesaugt werden kann und sodann entlang des Vorbereitungsbodens **6** strömt. Um Früchte daran zu hindern, den Lufteintrittsquerschnitt **13** zu erreichen und auf diesem Wege in eine Umgebung auszutreten, umfasst der Rieselkornschutz **15** ein Leitblech **16,** das sich in Längsrichtung des Mähdreschers **1** betrachtet geneigt orientiert zwischen der Steinfangmulde **22** und dem Vorbereitungsboden **6** erstreckt. Das Leitblech **16** ist hierbei derart geneigt, dass es in Richtung des hinteren Endes des Mähdreschers **1** ansteigt. Das Leitblech **16** hat insbesondere die Funktion, Früchte, die von dem Dreschkorb **7** aus auf den Vorbereitungsboden **6** fallen und von dem Vorbereitungsboden **6** ausgehend in einer ungünstigen Weise, das heißt in einer ungünstigen Trajektorie, beschleunigt werden, "abzufangen", wobei die Früchte in einer von dem Vorbereitungsboden **6** aus ansteigenden Bewegung gegen eine Unterseite **19** des Leitblechs **16** prallen und wieder zurück auf den Vorbereitungsboden **6** fallen. Damit der Luftvolumenstrom **11** trotz des Leitblechs **16** in den Bereich des Vorbereitungsbodens **6** eintreten kann, ist eine Öffnung **31** ausgebildet. Diese Öffnung **31** steht prinzipbedingt auch Früchten offen, um ausgehend von dem Vorbereitungsboden **6** durch die Öffnung **31** zu einer Oberseite **18** des Leitblechs **16** zu gelangen. Aufgrund der beschriebenen Neigung des Leitblechs **16** rutschen Früchte, die auf diesem Wege ungewollt zu der Oberseite **18** gelangen, sodann in Richtung des Lufteintrittsquerschnitts **13,** sodass sie ohne weitere Vorkehrungen durch letzteren hindurch aus dem Mähdrescher **1** austreten könnten. Um dies zu verhindern, umfasst der Rieselkornschutz **15** eine Fangwand **21,** die sich ausgehend von der Oberseite **18** des Leitblechs **16** nach oben vorstehend erstreckt. Diese Fangwand **21** fängt die Früchte ab. Damit diese Früchte dem Vorbereitungsboden **6** wieder zugeführt werden können, ist in dem gezeigten Beispiel in dem Leitblech **16** eine Vielzahl von Öffnungen **17** ausgebildet, die in räumlicher Nähe zu der Fangwand **21** angeordnet sind. Diese Öffnungen **17** dienen dazu, dass die an der Oberseite **18** des Leitblechs **16** befindlichen Früchte durch die Öffnungen **17** hindurch zu der Unterseite **19** und mithin zu dem Vorbereitungsboden **6** gelangen können.

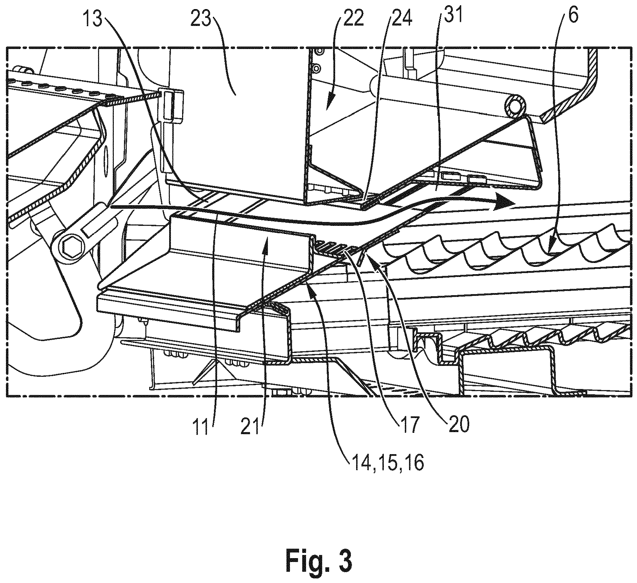

In bevorzugter Weise ist die Lufteintrittsstruktur **14** in dem gezeigten Beispiel derart angeordnet, dass die vordere Wandung **23** der Steinfangmulde **22** und die Fangwand **21** des Rieselkornschutzes **15** gemeinsam den Lufteintrittsquerschnitt **13** begrenzen. Dies ergibt sich besonders gut anhand von **Figur 3****.** Insbesondere sind die Wandung **23** und die Fangwand **21** zumindest im Wesentlichen entlang einer gemeinsamen Ebene ausgerichtet. Der Lufteintrittsquerschnitt **13** erstreckt sich in Form eines Schlitzes zwischen diesen beiden Bauteilen.

In besonders bevorzugter Weise umfasst die Steinfangmulde **22** eine Rieselöffnung **24,** die an einer tiefsten Stelle der Steinfangmulde **22** ausgebildet ist. Durch diese Rieselöffnung **24** hindurch können Früchte, die in die Steinfangmulde **22** gelangt sind, nach unten abgeleitet werden, wobei sie auf die Lufteintrittsstruktur **14** fallen. In bevorzugter Weise ist der Rieselkornschutz **15** derart angeordnet, dass die Fangwand **21** in Längsrichtung des Mähdreschers betrachtet vor der Rieselöffnung **24** angeordnet ist, sodass die durch die Rieselöffnung **24** hindurch abgeschiedenen Früchte, die auf der Oberseite **18** des Leitblechs **16** auftreffen, daran gehindert sind, durch den Lufteintrittsquerschnitt **13** aus dem Mähdrescher **1** auszutreten. Stattdessen werden sie an der Fangwand **21** abgefangen und durch die Öffnungen **17** hindurch dem Vorbereitungsboden **6** zugeleitet.

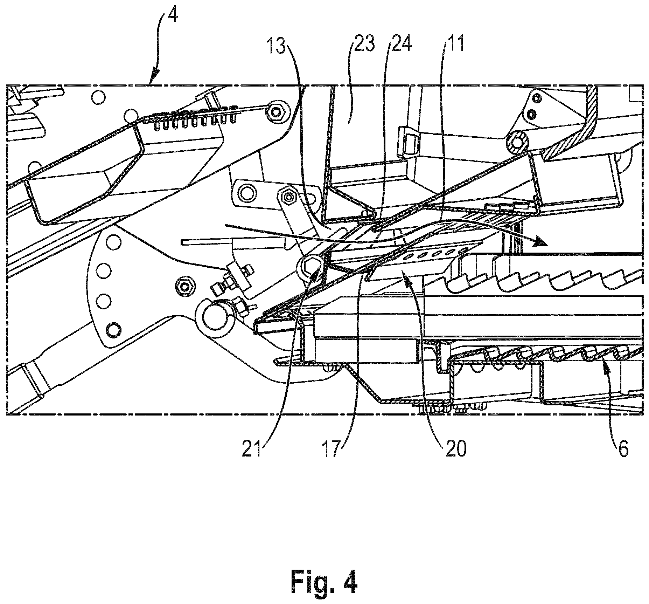

Schließlich umfasst der Rieselkornschutz **15** noch ein Prallblech **20,** das den Öffnungen **17** von der Unterseite **19** des Leitblechs **16** her zugeordnet ist. Das Prallblech **20** ist gegenüber einer Ebene, in der sich das Leitblech **16** erstreckt, schräg orientiert ausgebildet und ist dazu eingerichtet, die Öffnungen **17** abzuschirmen. Insbesondere verhindert das Prallblech **20** einen unbeabsichtigten Durchtritt von Früchten von der Unterseite **19** durch die Öffnungen **17** zu der Oberseite **18** des Leitblechs **16.** Das Prallblech **20** ergibt sich besonders gut anhand von **Figur 4**.

### Bezugszeichenliste

- 1: Mähdrescher
- 2: Schneidorgan
- 3: Pflanze
- 4: Schrägförderer
- 5: Dreschorgan
- 6: Vorbereitungsboden
- 7: Dreschkorb
- 8: Trennorgan
- 9: Sieborgan
- 10: Saugwindgebläse
- 11: Luftvolumenstrom
- 12: Saugseite
- 13: Lufteintrittsquerschnitt
- 14: Lufteintrittsstruktur
- 15: Rieselkornschutz
- 16: Leitblech
- 17: Öffnung
- 18: Oberseite
- 19: Unterseite
- 20: Prallblech
- 21: Fangwand
- 22: Steinfangmulde
- 23: Wandung
- 24: Rieselöffnung
- 25: Obersieb
- 26: Untersieb
- 27: Elevator
- 28: Korntank
- 29: Häckselorgan
- 30: Austragorgan
- 31: Öffnung
- 32: Rücklaufboden
- 33: Überladeeinrichtung

## Patentansprüche

1. Selbstfahrender Mähdrescher (1), umfassend
- ein Schneidorgan (2) zum Abschneiden von Pflanzen (3),
- einen Schrägförderer (4) zur Förderung abgeschnittener Pflanzen (3) von dem Schneidorgan (2) zu einem Dreschorgan (5),
- ein Dreschorgan (5) zur Ablösung von Früchten der Pflanzen (3) von Pflanzenresten,
- einen unterhalb des Dreschorgans (5) angeordneten Vorbereitungsboden (6), mittels dessen durch einen Dreschkorb (7) des Dreschorgans (5) abgeschiedene Früchte übernehmbar sind,
- ein Trennorgan (8) zur Trennung abgelöster Früchte von groben Pflanzenresten,
- ein Sieborgan (9) zur Trennung abgelöster Früchte von feinen Pflanzenresten sowie
- ein Saugwindgebläse (10) zur Erzeugung eines Luftvolumenstroms (11), mittels dessen das Sieborgan (9) fortwährend reinigbar ist,
wobei das Saugwindgebläse (10) in Längsrichtung des Mähdreschers (1) betrachtet hinter dem Sieborgan (9) angeordnet ist und eine dem Sieborgan (9) zugeordnete Saugseite (12) aufweist, an der der Luftvolumenstrom (11) ansaugbar ist,
wobei in Längsrichtung des Mähdreschers (1) betrachtet vor dem Sieborgan (9) mindestens ein Lufteintrittsquerschnitt (13) ausgebildet ist, durch den der Luftvolumenstrom (11) ansaugbar ist,
wobei der Lufteintrittsquerschnitt (13) an einer Lufteintrittsstruktur (14) ausgebildet ist,
wobei die Lufteintrittsstruktur (14) einen Rieselkornschutz (15) aufweist, der einen unerwünschten Austritt von Früchten durch den Lufteintrittsquerschnitt (13) vermindert,
**dadurch gekennzeichnet, dass**
die Lufteintrittsstruktur (14) zwischen dem Dreschorgan (5) und dem Vorbereitungsboden (6) angeordnet ist.

2. Mähdrescher (1) nach Anspruch 1, **dadurch gekennzeichnet, dass** der Rieselkornschutz (15) nach Art einer Labyrinthdichtung ausgebildet ist, sodass der Rieselkornschutz (15) eine mehrfache Umlenkung des Luftvolumenstroms bei dessen Eintritt erzwingt.

3. Mähdrescher (1) nach einem der vorhergehenden Ansprüche, **dadurch gekennzeichnet, dass** der Rieselkornschutz (15) ein Leitblech (16) umfasst, das sich zwischen dem Dreschorgan (5) und dem Vorbereitungsboden (6) erstreckt.

4. Mähdrescher (1) nach Anspruch 3, **dadurch gekennzeichnet, dass** in dem Leitblech (16) mindestens eine Öffnung (17) ausgebildet ist, durch die hindurch Früchte von einer Oberseite (18) des Leitblechs (16) her in Richtung des Vorbereitungsbodens (6) fallen können.

5. Mähdrescher (1) nach Anspruch 4, **dadurch gekennzeichnet, dass** der Rieselkornschutz (15) an einer Unterseite (19) des Leitblechs (16) ein der Öffnung (17) zugeordnetes Prallblech (20) umfasst, mittels dessen die Öffnung (17) derart abgeschirmt ist, dass ein unbeabsichtigter Durchtritt von Früchten von der Unterseite (19) des Leitblechs (16) her durch die Öffnung (17) hindurch zu der Oberseite (18) des Leitblechs (16) vermieden ist.

6. Mähdrescher (1) nach Anspruch 4 oder 5, **dadurch gekennzeichnet, dass** der Rieselkornschutz (15) in Strömungsrichtung des Luftvolumenstroms (11) betrachtet vor der mindestens einen Öffnung (17) eine nach oben über die Oberseite (18) des Leitblechs (16) vorstehende Fangwand (21) umfasst.

7. Mähdrescher (1) nach einem der Ansprüche 3 bis 6, **dadurch gekennzeichnet, dass** das Leitblech (16) - in Längsrichtung des Mähdreschers (1) betrachtet - ansteigend geneigt orientiert ist.

8. Mähdrescher (1) nach einem der vorhergehenden Ansprüche, **gekennzeichnet durch** eine Steinfangmulde (22), die an einem dem Schrägförderer (4) zugewandten Ende des Dreschorgans (5) angeordnet und dazu eingerichtet ist, unerwünschte Steine vor deren Eintrag in das Dreschorgan (5) abzuscheiden.

9. Mähdrescher (1) nach Anspruch 8, **dadurch gekennzeichnet, dass** sich der Vorbereitungsboden (6) unterhalb der Steinfangmulde (22) bis zu einem dem Schrägförderer (4) zugewandten Ende der Steinfangmulde (22) erstreckt.

10. Mähdrescher (1) nach Anspruch 8 oder 9, **dadurch gekennzeichnet, dass** die Lufteintrittsstruktur (14) unterhalb eines dem Schrägförderer (4) zugwandten Ende der Steinfangmulde (22) angeordnet ist.

11. Mähdrescher (1) nach den Ansprüchen 6 und 10, **dadurch gekennzeichnet, dass** die Fangwand (21) des Rieselkornschutzes (15) und eine vordere Wandung (23) der Steinfangmulde (22) gemeinsam den Lufteintrittsquerschnitt (13) begrenzen, wobei vorzugsweise die Fangwand (21) des Rieselkornschutzes (15) und die Wandung (23) der Steinfangmulde (22) sich in einer gemeinsamen Ebene erstrecken.

12. Mähdrescher (1) nach Anspruch 10 oder 11, **dadurch gekennzeichnet, dass** die Steinfangmulde (22) eine Rieselöffnung (24) aufweist, durch die hindurch in die Steinfangmulde (22) gelangte Früchte hindurch in Richtung der Lufteintrittsstruktur (14) abgeleitet können.

13. Mähdrescher (1) nach den Ansprüchen 6 und 12, **dadurch gekennzeichnet, dass** die Fangwand (21) des Rieselkornschutzes (15) in Längsrichtung des Mähdreschers (1) betrachtet vor der Rieselöffnung (24) angeordnet ist, sodass Früchte, die durch die Rieselöffnung (24) hindurch auf den Rieselkornschutz (15) fallen, mittels der Fangwand (21) gehindert sind, in Richtung einer Vorderseite des Mähdreschers (1) aus selbigem auszutreten.

14. Mähdrescher (1) nach Anspruch 13, **dadurch gekennzeichnet, dass** die Öffnung (17) des Leitblechs (16) der Rieselöffnung (24) derart räumlich zugeordnet ist, dass durch die Rieselöffnung (24) fallende Früchte mittels der Öffnung (17) durch den Rieselkornschutz (15) hindurch in Richtung des Vorbereitungsbodens (6) leitbar sind.

## Claims

1. A self-propelled combine harvester (1), comprising
- a cutting means (2) for cutting plants (3),
- an inclined conveyor (4) for conveying cut plants (3) from the cutting means (2) to a threshing means (5),
- a threshing means (5) for detaching fruits of the plants (3) from plant residues,
- a grain pan (6) disposed below the threshing means (5), by means of which fruits separated out by a threshing concave (7) of the threshing means (5) can be transferred,
- a separating means (8) for separating detached fruits from coarse plant residues,
- a sieve means (9) for separating detached fruits from fine plant residues, as well as
- an air suction fan (10) for producing a volumetric air flow (11), by means of which the sieve means (9) can be continuously cleaned, wherein, when considered in the longitudinal direction of the combine harvester (1), the air suction fan (10) is disposed behind the sieve means (9) and has a suction side (12) associated with the sieve means (9) at which suction side the volumetric air flow (11) can be drawn in,
wherein, in front of the sieve means (9) when considered in the longitudinal direction of the combine harvester (1), at least one air intake cross section (13) is formed through which the volumetric air flow (11) can be drawn in,
wherein the air intake cross section (13) is formed at an air intake structure (14),
wherein the air intake structure (14) has a flowing grain shield (15) which reduces an unwanted escape of fruits through the air intake cross section (13),
**characterized in that**
the air intake structure (14) is disposed between the threshing means (5) and the grain pan (6).

2. The combine harvester (1) according to claim 1, **characterized in that** the flowing grain shield (15) is constructed in the manner of a labyrinth seal, so that the flowing grain shield (15) forces the volumetric air flow to be deflected multiple times when it is taken in.

3. The combine harvester (1) according to one of the preceding claims, **characterized in that** the flowing grain shield (15) comprises a guide plate (16) which extends between the threshing means (5) and the grain pan (6).

4. The combine harvester (1) according to claim 3, **characterized in that** at least one opening (17) is formed in the guide plate (16), through which fruits can fall from an upper side (18) of the guide plate (16) in the direction of the grain pan (6).

5. The combine harvester (1) according to claim 4, **characterized in that** the flowing grain shield (15) comprises a deflector plate (20) associated with the opening (17) on an underside (19) of the guide plate (16), by means of which deflector plate the opening (17) is shielded in a manner such that an unintentional passage of fruits from the underside (19) of the guide plate (16) through the opening (17) to the upper side (18) of the guide plate (16) is prevented.

6. The combine harvester (1) according to claim 4 or claim 5, **characterized in that**, in front of the at least one opening (17) when considered in the direction of flow of the volumetric air flow (11), the flowing grain shield (15) comprises a collecting wall (21) which projects upwards above the upper side (18) of the guide plate (16).

7. The combine harvester (1) according to one of claims 3 to 6, **characterized in that** the guide plate (16) - when considered in the longitudinal direction of the combine harvester (1) - is upwardly inclined in orientation.

8. The combine harvester (1) according to one of the preceding claims, **characterized by** a stone collecting trough (22), which is disposed on an end of the threshing means (5) facing the inclined conveyor (4) and is thereby configured to separate out unwanted stones prior to entry into the threshing means (5).

9. The combine harvester (1) according to claim 8, **characterized in that** the grain pan (6) extends below the stone collecting trough (22) to an end of the stone collecting trough (22) facing the inclined conveyor (4).

10. The combine harvester (1) according to claim 8 or claim 9, **characterized in that** the air intake structure (14) is disposed below an end of the stone collecting trough (22) facing the inclined conveyor (4).

11. The combine harvester (1) according to claims 6 and 10, **characterized in that** the collecting wall (21) of the flowing grain shield (15) and a front wall (23) of the stone collecting trough (22) together delimit the air intake cross section (13), wherein preferably, the collecting wall (21) of the flowing grain shield (15) and the wall (23) of the stone collecting trough (22) extend in a common plane.

12. The combine harvester (1) according to claim 10 or claim 11, **characterized in that** the stone collecting trough (22) has a flow opening (24) through which fruits which have reached the stone collecting trough (22) can be diverted in the direction of the air intake structure (14).

13. The combine harvester (1) according to claims 6 and 12, **characterized in that**, when considered in the longitudinal direction of the combine harvester (1), the collecting wall (21) of the flowing grain shield (15) is disposed in front of the flow opening (24), so that fruits which fall through the flow opening (24) onto the flowing grain shield (15) are impeded by means of the collecting wall (21) from escaping from the combine harvester (1) in the direction of a front side thereof.

14. The combine harvester (1) according to claim 13, **characterized in that** the spatial arrangement of the opening (17) of the guide plate (16) with respect to the flow opening (24) is such that fruits falling through the flow opening (24) can be guided through the flowing grain shield (15) in the direction of the grain pan (6) by means of the opening (17).

## Revendications

1. Moissonneuse-batteuse automotrice (1), comprenant
- un organe de coupe (2) destiné à couper des plantes (3),
- un convoyeur incliné (4) destiné à transporter des plantes (3) coupées, depuis l'organe de coupe (2) jusqu'à un organe de battage (5),
- un organe de battage (5) destiné à détacher les fruits des plantes (3) des résidus des plantes,
- une table de préparation (6) qui est disposée sous l'organe de battage (5) et permet de recueillir les fruits séparés par un contre-batteur (7) de l'organe de battage (5),
- un organe de séparation (8) destiné à séparer les fruits détachés des résidus de plantes grossiers,
- un organe formant grille (9) destiné à séparer les fruits détachés des résidus de plantes fins,
- un ventilateur aspirant à vent (10) destiné à générer un flux volumique d'air (11) permettant de nettoyer en continu l'organe formant grille (9),
dans laquelle le ventilateur aspirant à vent (10) est disposé après l'organe formant grille (9), vu dans le sens longitudinal de la moissonneuse-batteuse (1), et présente un côté aspiration (12) associé à l'organe formant grille (9), sur lequel le flux volumique d'air (11) peut être aspiré,
dans laquelle, vu dans le sens longitudinal de la moissonneuse-batteuse (1), au moins une section d'admission d'air (13) est réalisée avant l'organe formant grille (9), à travers laquelle le flux volumique d'air (11) peut être aspiré,
dans laquelle la section d'admission d'air (13) est réalisée sur une structure d'admission d'air (14),
dans laquelle la structure d'admission d'air (14) présente une protection contre le ruissellement de grains (15) qui réduit la sortie non souhaitée de fruits à travers la section d'admission d'air (13),
**caractérisée en ce que** la structure d'admission d'air (14) est disposée entre l'organe de battage (5) et la table de préparation (6).

2. Moissonneuse-batteuse (1) selon la revendication 1, **caractérisée en ce que** la protection contre le ruissellement de grains (15) est réalisée à la manière d'un joint labyrinthe, de sorte que la protection contre le ruissellement de grains (15) impose une déviation multiple du flux volumique d'air (11), lors de l'entrée de celui-ci.

3. Moissonneuse-batteuse (1) selon une des revendications précédentes, **caractérisée en ce que** la protection contre le ruissellement de grains (15) comprend une tôle de guidage (16) qui s'étend entre l'organe de battage (5) et la table de préparation (6).

4. Moissonneuse-batteuse (1) selon la revendication 3, **caractérisée en ce que** dans la tôle de guidage (16), il est prévu au moins une ouverture (17) à travers laquelle des fruits peuvent tomber depuis une face supérieure (18) de la tôle de guidage (16) en direction de la table de préparation (6).

5. Moissonneuse-batteuse (1) selon la revendication 4, **caractérisée en ce que** la protection contre le ruissellement de grains (15) comprend, sur une face inférieure (19) de la tôle de guidage (16), une tôle déflectrice (20) qui est associée à l'ouverture (17) et permet de protéger l'ouverture (17) de manière à éviter le passage non intentionnel de fruits depuis la face inférieure (19) de la tôle de guidage (16), à travers l'ouverture (17), vers la face supérieure (18) de la tôle de guidage (16).

6. Moissonneuse-batteuse (1) selon la revendication 4 ou 5, **caractérisée en ce que**, vu dans le sens d'écoulement du flux volumique d'air (11), la protection contre le ruissellement de grains (15) comprend une paroi d'arrêt (21) qui est située avant l'ouverture (17), au nombre d'au moins une, et dépasse vers le haut par rapport à la face supérieure (18) de la tôle de guidage (16).

7. Moissonneuse-batteuse (1) selon une des revendications 3 à 6, **caractérisée en ce que**, vu dans le sens longitudinal de la moissonneuse-batteuse (1), la tôle de guidage (16) est orientée avec une pente ascendante.

8. Moissonneuse-batteuse (1) selon une des revendications précédentes, **caractérisée en ce qu'**elle comporte un bac à pierres (22) qui est disposé à une extrémité de l'organe de battage (5) tournée vers le convoyeur incliné (4) et est agencé pour séparer des pierres indésirables avant leur entrée dans l'organe de battage (5).

9. Moissonneuse-batteuse (1) selon la revendication 8, **caractérisée en ce que** la table de préparation (6) s'étend sous le bac à pierres (22), jusqu'à une extrémité du bac à pierres (22) tournée vers le convoyeur incliné (4).

10. Moissonneuse-batteuse (1) selon la revendication 8 ou 9, **caractérisée en ce que** la structure d'admission d'air (14) est disposée sous une extrémité du bac à pierres (22) tournée vers le convoyeur incliné (4).

11. Moissonneuse-batteuse (1) selon les revendications 6 et 10, **caractérisée en ce que** la paroi d'arrêt (21) de la protection contre le ruissellement de grains (15) et une paroi avant (23) du bac à pierres (22) délimitent ensemble la section d'admission d'air (13), la paroi d'arrêt (21) de la protection contre le ruissellement de grains (15) et la paroi (23) du bac à pierres (22) s'étendant de préférence dans un plan commun.

12. Moissonneuse-batteuse (1) selon la revendication 10 ou 11, **caractérisée en ce que** le bac à pierres (22) présente une ouverture de ruissellement (24) à travers laquelle des fruits qui sont arrivés dans le bac à pierres (22) peuvent être évacués en direction de la structure d'admission d'air (14).

13. Moissonneuse-batteuse (1) selon les revendications 6 et 12, **caractérisée en ce que**, vu dans la direction longitudinale de la moissonneuse-batteuse (1), la paroi d'arrêt (21) de la protection contre le ruissellement de grains (15) est disposée avant l'ouverture de ruissellement (24), de sorte que des fruits qui tombent sur la protection contre le ruissellement de grains (15) à travers l'ouverture de ruissellement (24) sont empêchés par la paroi d'arrêt (21) de sortir de la moissonneuse-batteuse (1) en direction d'un côté avant de celle-ci.

14. Moissonneuse-batteuse (1) selon la revendication 13, **caractérisée en ce que** l'ouverture (17) de la tôle de guidage (16) est associée dans l'espace à l'ouverture de ruissellement (24), de manière à ce que des fruits tombant à travers l'ouverture de ruissellement (24) peuvent être dirigés à travers la protection contre le ruissellement de grains
